# EUROPEAN PATENT SPECIFICATION

(11) **EP 1 264 790 B1**
(45) Date of publication and mention of the grant of the patent: **01.08.2007**
(21) Application number: 02077197.8
(22) Date of filing: 04.06.2002
(51) Int. Cl.: B65G 69/28

(54) **Extension hinge construction for dock leveler**
Verlängerungsscharnieranordnung für Ladebrücke
Ensemble charnière de prolongement pour rampe de quai

(30) Priority: 05.06.2001 NL 1018210
(43) Date of publication of application: 11.12.2002
(73) Proprietor: STERTIL B.V., NL-9288 CA Kootstertille (NL)
(72) Inventor: Berends, Jan, 9285 ML Buitenpost (NL)
(74) Representative: Prins, Adrianus Willem

(56) References cited:
- EP-A- 0 183 126
- DE-U- 9 100 063
- DE-U- 9 211 510

## Description

The invention relates to an extension hinge construction according to the introductory portion of claim 1.

An extension hinge in a dock leveler connects the deck with the platform, such that the deck can pivot to bridge a difference in height between the loading floor of a truck and the platform during loading and unloading. Such an extension hinge construction is known from practice and is supplied, for instance, by the applicant as part of its dock leveler system.

For instance from European patent publication 0 183 126 A1, an extension hinge construction is known, whereby a deck plate can hinge about a horizontal axle which is fixedly connected with the deck plate. The axle is situated at the underside of the deck plate and is mounted on the lower edge of the plate. The edge of the recess in which the deck plate is situated is provided with an angle bar. The angle bar is provided with a bracket having a recess. The recess has a cross section in the shape of a semi-circle. In the recess, the axle can be received. The axle is movable relative to the recess. The underside of the bracket has the shape of an arc of a circle, along which a barrier mounted on the deck plate can move. When the plate hinges about the axle, this barrier guides the movement whilst keeping the deck in position and the shaft in the recess.

The known hinge constructions function well in practice, are reliable and have a long life. However, in use, when loading and unloading, a wheeled transport means, such as rolling containers, pallet trucks and the like, is wheeled from the loading floor across the hinge construction to the platform and vice versa. While wheeling the transport means in this path, under some circumstances much noise is generated, which may be experienced as objectionable by those working in the vicinity.

The object of the invention is to provide an extension hinge construction which produces less noise during use. To that end, the invention provides an extension hinge construction according to claim 1.

In the extension hinge construction according to the invention, the deck rests on a rotation element which is arranged on the platform, such that when the deck hinges, the hinge point of the deck is situated close to the platform edge. As a result, in each case, there is a minimal difference in height between deck and platform, so that during use little noise is produced. In a further elaboration of the invention, the rotation element is designed as an elastic element. What is thus achieved is that in addition to a minimal difference in height between platform and deck, vibrations in the deck are damped by the elastic element, whereby the noise production is further reduced.

The invention further relates to a lip for a dock leveler.

It is noted that the German Utility Model G9100063.7 likewise discloses an extension hinge construction. The construction known from this utility model comprises a bridge deck with a deck plate to which on the underside a transversely extending axle is welded. On the lower side of the deck plate, a plate extending perpendicularly downwards is situated, which lies directly against the axle. The axle lies in a cup having a semi-circular cross section. The cup is fixedly attached with the deck. The free end of the cup extends in a recess of the plate. In the recess lies a locking element which lies against the outside of the cup. The locking element prevents the axle from coming out of the cup. German Utility Model G9211510.1 likewise discloses an extension hinge construction. This construction comprises a bridge deck which is pivotable about a horizontal axle. The axle is fixedly connected with the bridge deck and can be brought into a recess in a bearing point. With a locking provision, the axle can be fixed in the recess.

Particularly advantageous embodiments of the invention are described in the dependent claims. The invention will be further elucidated in and by a detailed description of an exemplary embodiment of the invention, with reference to the drawing. In the drawing:
Fig. 1 shows in perspective an example of a dock leveler,
Fig. 2 shows in cross section an exemplary embodiment of a hinge construction according to the invention,
Fig. 3 shows in cross section a second exemplary embodiment of a hinge construction according to the invention,
Fig. 4 shows a hinge pin according to the invention;
Fig. 5 shows a cross section of Fig. 4,
Fig. 6 shows a cross section of Fig. 4,
Fig. 7 shows a section of another exemplary embodiment of a hinge construction according to the invention,
Fig. 8 shows a lip of a dock leveler,
Fig. 9 shows a side elevation of Fig. 8, and
Fig. 10 shows a section of Fig. 8.

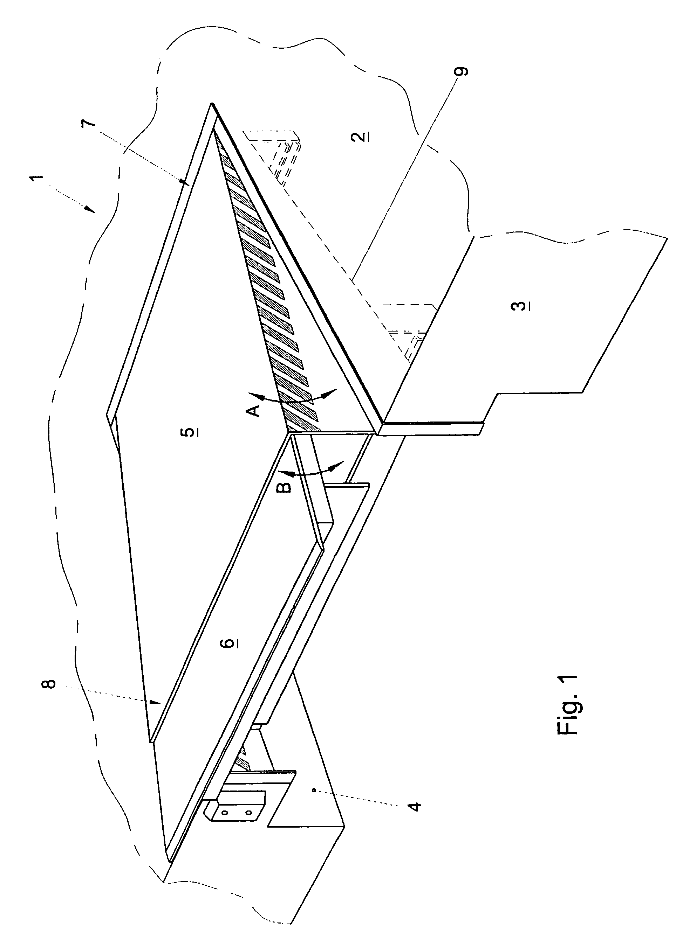

In Fig. 1 there is shown a dock leveler 1. Such a dock leveler is used to obtain a flowing transition between a loading floor of a truck placed opposite the dock leveler, and the platform 2 in which the dock leveler is fitted. The platform 2 has an upstanding edge 3, as a result of which the platform level is situated above the road surface. The dock leveler 1 has been installed in a recess 4 made in the platform 2. The dock leveler has a deck 5 and a lip 6. The deck 5 can pivot by means of a hinge construction 7, also called extension hinge, relative to the platform 2 in the direction designated by the arrow A. The lip 6 can pivot by means of a hinge construction 8 relative to the deck 5 in the direction designated by the arrow B. In this example, the dock leveler 1 is connected to the platform by means of a frame 9, represented in broken lines in Fig. 1. The deck 5 and the lip 6 can be moved by drives known per se, not shown in Fig. 1.

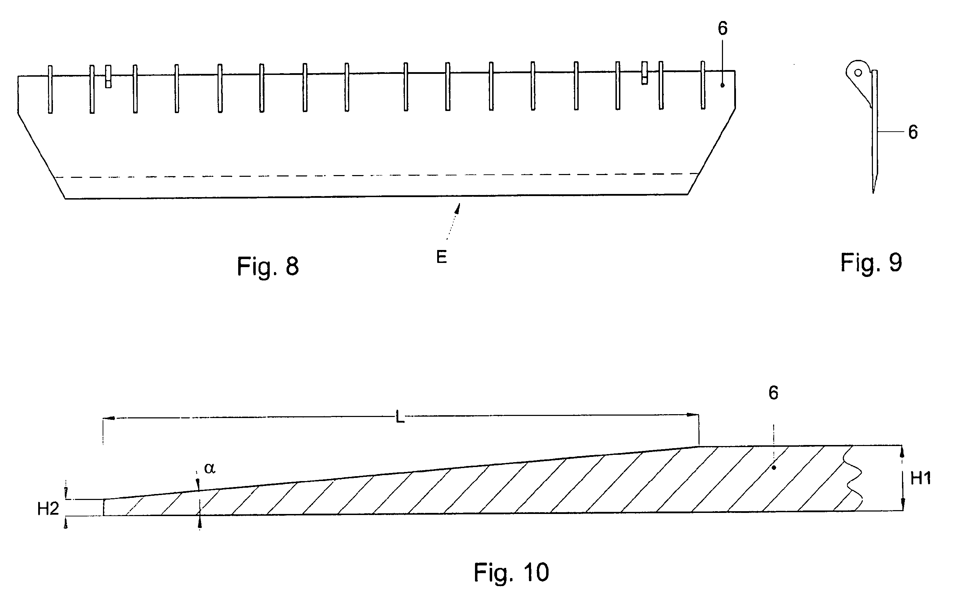

In use, a truck is placed with its back near the dock leveler, after which the deck 5 and the lip 6 are pivoted in the respective directions A and B, such that the leading end of the lip 6 rests on the loading floor of the truck. Any difference in height between the loading floor and the platform is thereby bridged. Next, the truck can be loaded and/or unloaded. Usually, for this purpose, wheeled transport means, such as, for instance, rolling containers and pallet trucks, are wheeled across the lip and the deck from the truck to the platform and vice versa. In Figs. 8-10, an example of an embodiment of a lip 6 is shown.

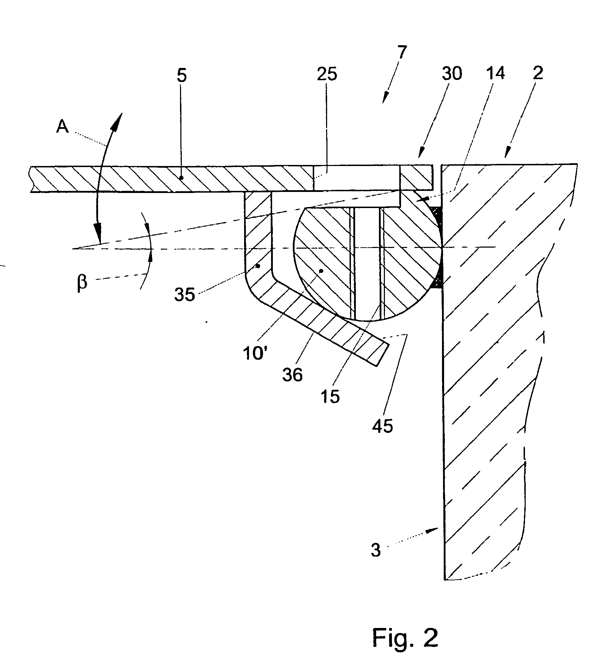

In Fig. 2 a section is shown of a hinge construction 7 according to the invention. The hinge construction comprises an elongated rod 10, in this example having a substantially circular cross section, which is mounted on the platform 2 along the rear edge of the opening 4. The rod 10 can be connected with the platform in any desired manner, for instance by interposition of a frame or section. The rod 10 is provided with an upstanding edge 14, which extends along the length of the rod 10. For that matter, the edge 14 may also be interrupted in certain portions along its length. In mounted condition, the edge 14 is situated near the platform edge 2.

The deck 5 is connected with the hinge construction in the following manner. The edge 30 of the deck 5 rests on the edge 14. Further, the deck 5 is provided, at the underside thereof, with a section 35 of L-shaped cross section, which extends along the edge 30, one of the legs of the L being connected with the deck 5. The legs of the section 35 include an obtuse angle with each other, so that the leg 36 remote from the deck 5 makes an angle with the level of the deck 5. The side of the leg 36 in mounted condition facing the rod 10 forms a sliding surface 45, which, in mounted condition as shown in Fig. 2, abuts against the rod 10.

Provided in the rod 10 are threaded openings 15, into which pegs can be turned. These pegs engage in corresponding openings 25 in the deck 5. Consequently, horizontal movement of the deck 5 is limited.

In use, the deck 5 is pivoted in the direction A, with an extreme lower position indicated by the angle β. The hinge point of the deck 5 is defined by the edge 14 on which the edge 30 rests, the edge 14 thus forming a rotation element. The path of the pivoting deck 5 is guided by the contact between the sliding surface 45 and the rod 10. The combination of the sliding surface 45 and the rod 10 forms a guide structure for guiding the deck during pivotal movement. The rod 10 here forms a first sliding surface, which is connected with the platform edge and is situated remote from the rotation element, and the sliding surface 45 forms a second sliding surface, which is connected with the deck 5. In mounted condition, the surfaces are in mutual abutment, and during pivotal movement they slide over each other. By adjusting the contour of the sliding surface 45, for instance by using one or more straight parts, a different path of the deck 5 during pivoting can be obtained in a simple manner.

Due to the edge 30 of the deck resting on the rotation element in the form of the edge 14, which is located against or near the platform edge, the hinge point of the deck 5 is situated close to the platform edge. Consequently, there is in each case a minimal difference in height between deck and platform, which is comparatively independent of the position of the deck. In addition, the intermediate space between deck and platform is also comparatively small. Due to the small difference in height, little noise is produced during use.

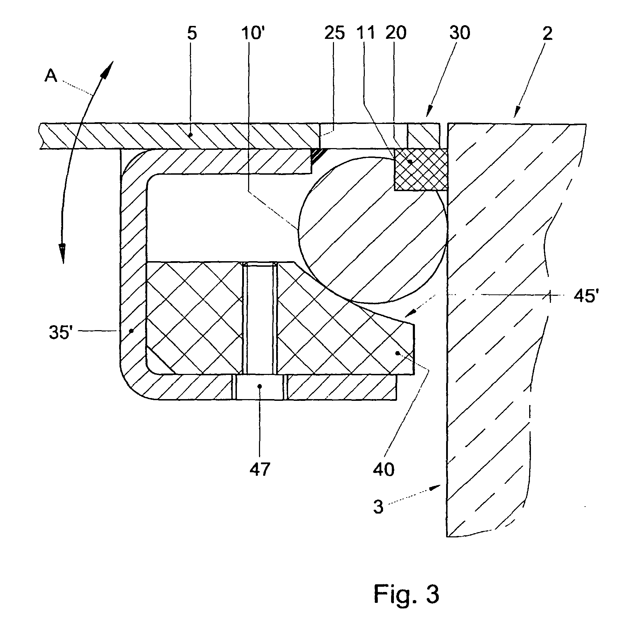

In Fig. 3 a second exemplary embodiment according to the invention is shown. Parts corresponding to those described in the first exemplary embodiment are identically numbered. In this example, the hinge construction has an elongated rod 10', in this example having a substantially circular cross section, which is mounted on the platform 2 along the rear edge of the opening 4. The rod 10' can be connected with the platform in any desired manner, for instance by interposition of a frame or section.

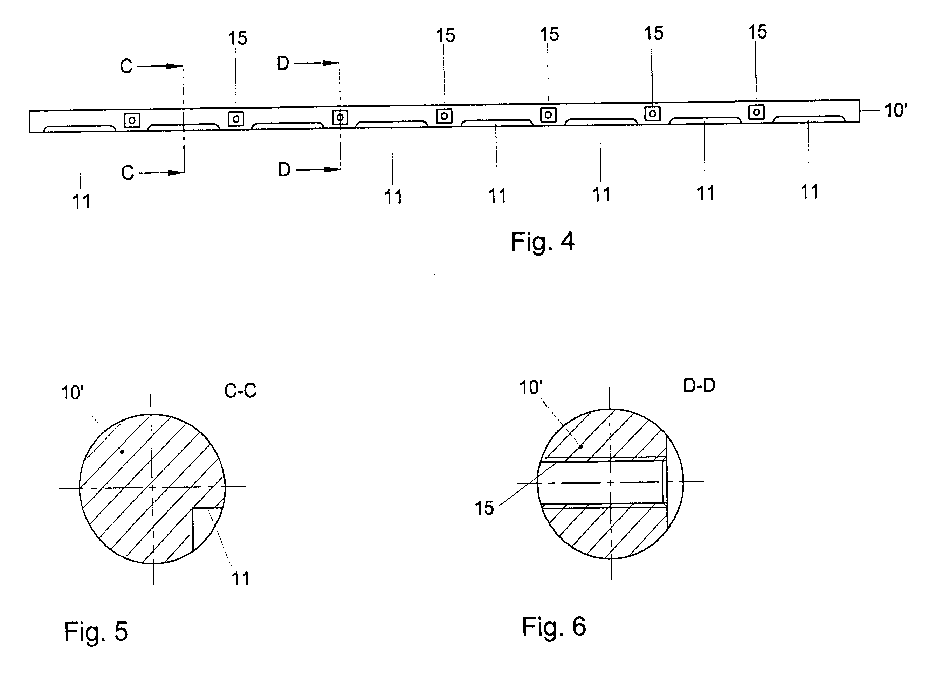

In Fig. 4 a top plan view of the rod 10' is shown, with Figs. 5 and 6 respectively showing cross sections taken along the lines indicated in Fig. 4. The rod 10' is provided with, in this example eight, recesses 11, which are provided in the circumferential surface of the rod 10', as shown in Fig. 5. In mounted condition, as shown in Fig. 3, elastic elements 20 are inserted in the recesses 11. In this example, accordingly, eight elements 20 are used. The rod 10' supports the elastic element 20, so that forces applied to the element 20 in vertical direction are transmitted to the fixed substrate. The element 20 is manufactured from an elastic material, such as, for instance, natural or synthetic rubber or polyurethane. Preferably, the material has a Shore A hardness between 80 and 95, and in particular a Shore A hardness of about 92. If desired, the properties of the elements 20 may be mutually different, such as, for instance, the modulus of elasticity, spring constant, and damping properties, so that the respective elements 20 can be adjusted to the locally occurring loads.

The deck 5 is connected with the hinge construction in the following manner. The edge 30 of the deck 5 rests on elastic elements 20. Further, the deck 5 is provided, at the underside thereof, with a section 35' of U-shaped cross section, which extends along the edge 30. Within the U of the section 35', on the leg of the U remote from the deck 5, a sliding block 40 has been mounted by means of a bolt connection 47. This sliding block 40 is provided with a sliding surface 45' which, in mounted condition as shown in Fig. 3, abuts against the rod 10'. The sliding surface 45' has a contour which describes an involute, so that the deck 5 when pivoting in the direction indicated by the arrow A, is guided along a uniform path. By adjusting the contour of the sliding surface 45', the path of the deck 5 can be modified. The sliding block can be made of, for instance, a plastic, such as nylon. In this example, for the guide of the deck 5 and the support of the elastic elements, use is made of the same part in the form of the rod 10'. In this example, this provides the advantage that only few different parts are needed. However, the invention can also be implemented in a manner whereby the above-mentioned support and guidance are obtained through different parts.

Provided between the recesses 11 in the rod 10 are threaded openings 15, into which pegs can be turned. These pegs engage in corresponding openings in the deck 5, thereby limiting the horizontal movement of the deck.

In use, the deck 5 is pivoted in the direction A. The hinge point of the deck 5 is then defined by the elastic elements 20 on which the edge 30 rests, the elastic elements 20 thus fulfilling the function of rotation elements. The path of the pivoting deck 5 is guided by the contact between the sliding surface 45' and the rod 10'. The combination of the block 40 with the sliding surface 45' and the rod 10' forms a guide structure for guiding the deck during pivotal movement. The rod 10' here forms a first sliding surface, which is connected with the platform edge and is situated remote from the elastic element, and the sliding surface 45' forms a second sliding surface, which is connected with the deck 5.

Due to the edge 30 of the deck resting on the rotation element in the form of the elastic element 20, the hinge point of the deck is situated close to the platform edge. Consequently, there is in each case a minimal difference in height between deck and platform, which is comparatively independent of the position of the deck. In addition, the intermediate space between deck and platform is also comparatively small. Due to the small difference in height, little noise is produced during use. Further, vibrations in the deck are damped by the elastic element, thereby reducing the noise production further.

In the examples mentioned, the rod 10, 10' is a solid body having a circular cross section, but the invention is not limited to this embodiment mentioned by way of example. Thus, for instance, the cross section can have any desired shape. Also, the rod 10, 10' is not necessarily designed in one piece, but may consist of several parts. Instead of a rod, other means can be used to support the rotation elements. Preferably, the rotation elements are supported by connecting them mechanically with the sidewall of the platform, but if desired the rotation elements can also be wholly or partly supported on, for instance, the fixed ground.

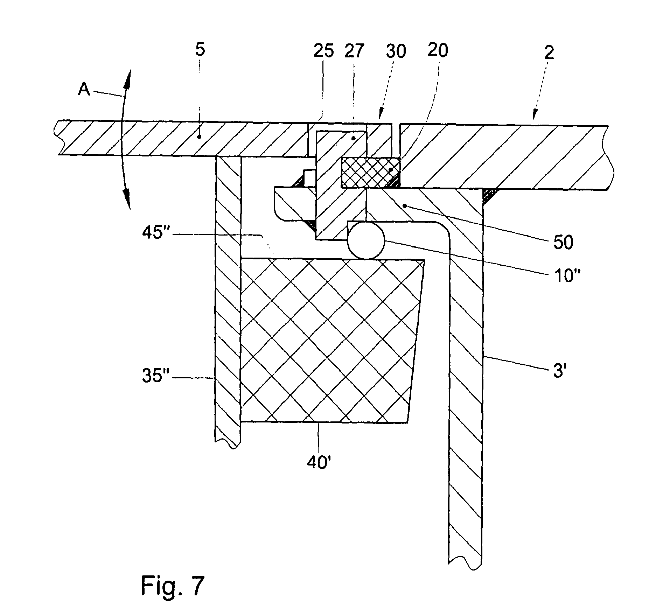

In Fig. 7 a third exemplary embodiment of a hinge construction according to the invention is described. Parts corresponding to those described in the first exemplary embodiment are identically numbered. In this example, the platform 2 is provided with an L-section 3' which is mounted in such a manner that a leg 50 of the L-shape extends beyond the edge of the platform 2. The elastic element 11 is fitted on the leg 50 of the L-section 3', such that the rotation element 11 is situated against, or very close to, the platform edge. As in the foregoing example, the deck 5 has its edge resting on the elastic element 11. The leg 50 is provided with pegs 27 which engage in the openings 25 of the deck 5. At the underside, a circular rod 10" is arranged on the leg 50.

The deck 5 is connected, at the underside, with a sliding block 40', by means of a connecting member 35" extending downwards from the deck 5. The sliding block 40' is provided with a sliding surface 45" which, in mounted condition, faces the rod 10". In use, the rod 10" and the sliding surface 45" slide along each other, thereby guiding the pivoting movement of the deck 5. Sliding surface 45' and rod 10 thus form a guide structure. In this embodiment, too, what is achieved by the rotation element is that the hinge point of the deck lies close to the platform edge, so that in each case there is a minimal difference in height between deck and platform.

In the above-described examples, several elongated elastic elements 20 are used. The invention is not limited to this implementation mentioned by way of example. Thus, the invention can also be implemented, for instance, with a one-piece elastic element or more elements. In the examples mentioned, the elastic element is manufactured from a single material. According to the invention, the elastic element can also be manufactured from several materials, such as, for instance, matrix and/or multilayer materials.

Another aspect of the invention relates to a lip for a dock leveler. In use, during loading and unloading, a wheeled transport means, such as rolling containers, pallet trucks and the like, is wheeled from the loading floor of the truck across the lip to the platform and vice versa. While wheeling the transport means in this path, under some circumstances a great deal of noise is generated, which may be experienced as objectionable by those working in the vicinity. Measurements have shown that a considerable proportion of the noise production is caused in that the wheels of, for instance, the rolling container, butt against the edge of the lip, and that the height of the edge of the lip has an influence on the quantity of noise produced. In particular, it was found that the use of a less high edge resulted in a surprising and disproportionally large reduction of the noise produced. By manufacturing the lip from high-strength steel, such as steel having a yield point greater than 600 N/mm² and preferably greater than 700 N/mm², the edge of the lip, as well as the whole lip, can be made of thinner design, without affecting the strength of the whole lip.

In Figs. 8-10, an example of a lip according to the invention is shown. In Fig. 9 a cross section of the leading edge of E of the lip 6 is shown. The height H2 of the upstanding edge of the lip 6 is between 1.2 and 2.5 mm, and preferably between 1.5 and 1.9 mm. The thickness of the plate H1 is between 6 and 10 mm, and preferably between 7 and 9 mm. The inclination α of the bevel between the upstanding edge and the full thickness of the plate is between 3° and 8° and preferably between 4° and 5°. The length L of the inclination is preferably between 50 and 100 mm.

It is preferred to make the surface of the lip slip-resistant by providing it with an antislip layer in the form of a coating with an antislip filler, such as, for instance, twaron granules. This provides the advantage that the conventional, expensive surface treatment of rolling a tear profile can be omitted. Also, such a coating yields a surface roughness with a random distribution, so that less noise is produced.

A lip as described hereinabove can also be used in a dock leveler which is not provided with a hinge construction as described hereinbefore.

## Claims

1. An extension hinge construction for a dock leveler, comprising
a deck plate (5), and
a supporting device (10, 10', 10") for operatively supporting an edge (30) of the deck plate (5) on a platform edge (3),
at least one rotation element (14, 20) supported by the supporting device (10) and situated near the platform edge (3), the edge (30) of the deck plate (5) at least partly resting on the rotation element (14, 20)
**characterized in that**
the deck plate (5) is movable relative to the rotation element (14, 20).

2. A device according to claim 1, wherein the rotation element (14, 20) defines at least partly a hinge point of the deck plate (5).

3. A device according to claim 1 or 2, further provided with a supporting body (10, 10', 10") connected with the platform, the supporting body supporting the at least one rotation element (14, 20).

4. A device according to any one of the preceding claims, **characterized by** several rotation elements (14, 20) placed across the width of the deck plate.

5. A device according to any one of the preceding claims, **characterized in that** the at least one rotation element is formed by an elastic element (20).

6. A device according to claim 5, **characterized in that** the elastic element (20) has a Shore A hardness in the range of 80-95.

7. A device according to any one of the preceding claims, further provided with a guide structure (10, 45, 10', 45', 10", 45") for guiding the deck (5) during hinging.

8. A device according to claim 7, wherein the guide structure comprises a first sliding surface (10, 10', 10"), connected with the platform edge and situated remote from the rotation element (14, 20), and a second sliding surface (45, 45', 45"), connected with the deck (5), while in operating condition the first and second sliding surface abut onto each other.

9. A device according to claim 8, provided with a rod (10, 10') having a substantially circular cross section, the rod (10, 10') forming the supporting device and the first sliding surface.

10. A device according to any one of the preceding claims, wherein the at least one rotation element (14, 20) comprises an upstanding edge (14, 20) of the supporting body, situated near the platform edge (3).

11. A dock leveler, with a loading deck and a platform, **characterized in that** the deck and the platform are connected by means of a hinge construction according to any one of the preceding claims.

12. A dock leveler according to claim 11, **characterized in that** the deck (5) is provided with a lip (6) manufactured from high-strength steel.

13. A dock leveler according to claim 12, **characterized in that** the high-strength steel has a yield point greater than 600 N/mm² and preferably greater than 700 N/ mm².

14. A dock leveler according to claim 13, **characterized in that** the leading edge of the lip has a height (H2) of between 1.2 and 2.5 mm, and preferably between 1.5 and 1.9 mm.

15. A dock leveler according to claim 13 or 14, **characterized in that** the top surface is provided with an antislip coating.

## Patentansprüche

1. Anbauscharnieranordnung für eine Ladebrücke, mit
einer Deckplatte (5) und
einer Stützvorrichtung (10,10',10") zum betriebsmäßigen Abstützen eines Randes (30) der Deckplatte (5) an einem Plattformrand (3),
mindestens einem Drehungselement (14,20), das von der Stützvorrichtung (10) gehalten ist und nahe dem Plattformrand (3) angeordnet ist, wobei der Rand (30) der Deckplatte (5) mindestens teilweise auf dem Drehungselement (14,20) ruht,
**dadurch gekennzeichnet, dass**
die Deckplatte (5) relativ zu dem Drehungselement (14,20) bewegbar ist.

2. Vorrichtung nach Anspruch 1, bei der das Drehungselement (14,20) mindestens teilweise eine Scharnieraufhängung der Deckplatte (5) bildet.

3. Vorrichtung nach Anspruch 1 oder 2, ferner versehen mit einem mit der Plattform verbundenen Stützkörper (10,10',10"), wobei der Stützkörper mindestens ein Drehungselement (14,20) stützt.

4. Vorrichtung nach einem der vorhergehenden Ansprüche, **gekennzeichnet durch** mehrere Drehungselemente (14,20), die über die Breite der Deckplatte platziert sind.

5. Vorrichtung nach einem der vorhergehenden Ansprüche, **dadurch gekennzeichnet, dass** mindestens ein Drehungselement durch ein elastisches Element (20) gebildet ist.

6. Vorrichtung nach Anspruch 5, **dadurch gekennzeichnet, dass** das elastische Element (20) eine Shore-A-Härte im Bereich von 85-90 hat.

7. Vorrichtung nach einem der vorhergehenden Ansprüche, ferner versehen mit einer Führungsstruktur (10,45,10',45',10",45") zum Führen des Decks (5) während der Scharnierbewegung.

8. Vorrichtung nach Anspruch 7, bei der die Führungsstruktur eine erste Gleitfläche (10,10',10"), die mit dem Plattformrand verbunden ist und von dem Drehungselement (14,20) entfernt angeordnet ist, und eine zweite Gleitfläche (45,45',45") aufweist, die mit dem Deck (5) verbunden ist, wobei im Betriebszustand die erste und die zweite Gleitfläche aneinander anliegen.

9. Vorrichtung nach Anspruch 8, versehen mit einem Stab (10,10'), der einen im Wesentlichen kreisförmigen Querschnitt hat, wobei der Stab (10,10') die Stützvorrichtung und die erste Gleitfläche bildet.

10. Vorrichtung nach einem der vorhergehenden Ansprüche, bei der das mindestens eine Drehungselement (14,20) einen nahe dem PlattformRand (3) angeordneten aufragenden Rand (14,20) des Stützkörpers aufweist.

11. Ladebrücke mit einem Ladedeck und einer Plattform, **dadurch gekennzeichnet, dass** das Deck und die Plattform mittels einer Scharnierverbindung nach einem der vorhergehenden Ansprüche miteinander verbunden sind.

12. Ladebrücke nach Anspruch 11, **dadurch gekennzeichnet, dass** das Deck (5) mit einer aus hochfestem Stahl hergestellten Lippe (6) versehen ist.

13. Ladebrücke nach Anspruch 12, **dadurch gekennzeichnet, dass** der hochfeste Stahl eine Streckgrenze über 600 N/mm² und vorzugsweise über 700 N/mm² hat.

14. Ladebrücke nach Anspruch 13, **dadurch gekennzeichnet, dass** der Vorderrand der Lippe eine Höhe (H2) von 1,2 bis 2,5 mm und vorzugsweise von 1,5 bis 1,9 mm hat.

15. Ladebrücke nach Anspruch 13 oder 14, **dadurch gekennzeichnet, dass** die obere Fläche mit einer Antirutschbeschichtung versehen ist.

## Revendications

1. Construction articulée d'extension pour une rampe de quai comprenant
un tablier (5), et
un dispositif de support (10, 10', 10") pour supporter fonctionnellement un bord (30) du tablier (5) sur un bord de plate-forme (3),
au moins un élément de rotation (14, 20) supporté par le dispositif de support (10) et situé près du bord de plate-forme (3), le bord (30) du tablier (5) reposant au moins en partie sur l'élément de rotation (14, 20)
**caractérisée en ce que**
le tablier (5) est mobile par rapport à l'élément de rotation (14, 20).

2. Dispositif selon la revendication 1, dans lequel l'élément de rotation (14, 20) définit au moins en partie une point d'articulation du tablier (5).

3. Dispositif selon la revendication 1 ou 2, pourvu en outre d'un corps de support (10, 10', 10") connecté à la plate-forme, le corps de support supportant l'au moins un élément de rotation (14, 20).

4. Dispositif selon l'une quelconque des revendications précédentes, **caractérisé par** plusieurs éléments de rotation (14, 20) placés sur la largeur du tablier.

5. Dispositif selon l'une quelconque des revendications précédentes, **caractérisé en ce que** l'au moins un élément de rotation est formé par un élément élastique (20).

6. Dispositif selon la revendication 5, **caractérisé en ce que** l'élément élastique (20) a une dureté Shore A dans une plage de 80-95.

7. Dispositif selon l'une quelconque des revendications précédentes, pourvu en outre d'une structure de guidage (10, 45, 10', 45', 10", 45"). Pour guider le tablier (5) pendant l'articulation.

8. Dispositif selon la revendication 7, dans lequel la structure de guidage comprend une première surface de glissement (10, 10', 10") connectée au bord de plate-forme et située à distance de l'élément de rotation (14, 20), et une seconde surface de glissement (45, 45',45"), connectée au tablier (5), alors qu'en condition de fonctionnement les première et seconde surfaces de glissement buttent l'une contre l'autre.

9. Dispositif selon la revendication 8, pourvu d'une tige (10, 10') ayant une section transversale sensiblement circulaire, la tige (10, 10') formant le dispositif de support et la première surface de glissement.

10. Dispositif selon l'une quelconque des revendications précédentes, dans lequel l'au moins un élément de rotation (14, 20) comprend un bord montant (14, 20) du corps de support, situé près du bord de plate-forme (3).

11. Rampe de quai, avec un tablier de chargement et une plate-forme, **caractérisée en ce que** le tablier et la plate-forme sont connectés au moyen d'une construction articulée selon l'une quelconque des revendications précédentes.

12. Rampe de quai selon la revendication 11, **caractérisée en ce que** le tablier (5) est pourvue d'une lèvre (6) fabriquée à partir d'un acier à haute résistance.

13. Rampe de quai selon la revendication 12, **caractérisée en ce que** l'acier à haute résistance a une limite d'élasticité apparente supérieure à 600 N/mm² et de préférence supérieure à 700 N/mm².

14. Rampe de quai selon la revendication 13, **caractérisée en ce que** le bord avant de la lèvre a une hauteur (H2) d'entre 1,2 et 2,5 mm, et de préférence entre 1,5 et 1,9 mm.

15. Rampe de quai selon la revendication 13 ou 14, **caractérisée en ce que** la surface supérieure est pourvue d'un revêtement anti-dérapant.
